# EUROPÄISCHE PATENTANMELDUNG

(11) **EP 1 097 877 A1**
(43) Veröffentlichungstag der Anmeldung: **09.05.2001**
(21) Anmeldenummer: 99122306.6
(22) Anmeldetag: 08.11.1999
(51) Int. Cl.: B65D 41/04

(54) **Verschlusskappe**

(71) Anmelder: Crown Cork & Seal Technologies Corporation, Alsip, IL 60803 (US)
(72) Erfinder: Bösl, Udo, 79591 Eimeldingen (DE); Simmen, Erich, 4447 Känerkinden (CH)
(74) Vertreter: Hepp, Dieter

(57) **Zusammenfassung**

Eine Verschlusskappe für einen Behälter mit kohlesäurehaltigen Getränken weist eine Kopfplatte (2) und eine sich vom Rand (3) der Kopfplatte (2) erstreckende etwa zylindrische Kappenschürze (4) auf. An der Innenseite (5) der Kappenschürze (4) ist ein Kappengewinde (6) vorgesehen. Im Übergangsbereich (7) zwischen der Kopfplatte (2) und der Kappenschürze (4) sind Verstärkungsrippen (8) vorgesehen, die sich bis an die Kopfplatte (2) erstrecken.

## Beschreibung

Die Erfindung betrifft eine Verschlusskappe, insbesondere eine Verschlusskappe für einen Behälter mit kohlesäurehaltigen Getränken mit den Merkmalen des Oberbegriffs von Patentanspruch 1.

Schraubverschlusskappen aus Kunststoff werden heute in einer Vielzahl von verschiedenen Ausführungsformen zum Verschliessen von Behältern wie z.B. Getränkeflaschen eingesetzt.

Die endgültige Position, in der sich die Verschlusskappe in aufgeschraubtem Zustand befindet, wird einerseits durch das Auf-schraubdrehmoment und andererseits durch das Verhältnis zwischen Geometrie der Verschlusskappe und der Behältermündung bestimmt. Insbesondere bei Verschlusskappen mit innenliegenden Lippendichtungen wird die Endlage der Verschlusskappe erreicht, wenn die Innenseite des Kappenbodens in Art eines Anschlags an der Stirnseite der Behältermündung anliegt.

Ein Problem bei solchen bekannten Verschlusskappen besteht im sogenannten Überdrehen. Wenn ein Benutzer fälschlicherweise versucht, unter Kraftaufwendung einen aufgesetzten Verschluss in die falsche Richtung zu drehen (d.h. weiter auf- statt abzuschrauben) besteht die Gefahr, dass die Gewinde der Verschlusskappe über die Gewinde der Behältermündung schnappen. Die Verschlusskappe kann so zeitweise ausser Eingriff mit der Behältermündung geraten. Insbesondere bei Flaschen mit unter Druck stehendem Inhalt wie beispielsweise kohlesäurehaltigen Getränken besteht dabei die Gefahr, dass der Verschluss abspringt. Abspringende Verschlüsse können den Benutzer verletzen.

Es wurde bereits vorgeschlagen, Überdrehsicherungen vorzusehen, die ein solches Überdrehen verhindern bzw. die bei einem Überdrehen zu einem kontrollierten Gasablass führen. In WO 95/2105 wird ein Bremselement beschrieben, welches ausserhalb des bei aufgesetztem Verschluss benutztem Gewindegangs angeordnet ist und welches bei versuchtem Überdrehen mit dem Gewindeende der Behältermündung in Eingriff gerät. Ein Überdrehen wird dabei vermieden.

Diese Lösung ist mit dem Nachteil behaftet, dass die Verschlusskappe beim Überdrehen in radialer Richtung stark deformiert wird.

Ausserdem sind Bremselemente bekannt, welche das Ende des Aufschraubvorgangs definieren; so ist aus WO 90/10581 ein in Achsrichtung oder in Umfangsrichtung wirkendes Bremselement bekannt, das gegen das Ende des Aufschraubvorgangs mit dem Gewindeanfang der Behältermündung in Eingriff gerät und so den Aufschraubvorgang begrenzt.

Es ist eine Aufgabe der vorliegenden Erfindung, die Nachteile des Bekannten zu vermeiden, insbesondere eine Verschlusskappe zu schaffen, welche wirkungsvoll ein Überdrehen bei aufgesetzter Verschlusskappe verhindert, und gleichzeitig bei einem Versuch des Überdrehens der Verformung der Kappe wirksam entgegenwirkt. Die Verschlusskappe soll auf einfache Weise herstellbar sein und auf herkömmlichen Behältermündungen einsetzbar sein.

Erfindungsgemäss werden diese Aufgaben mit einer Verschlusskappe mit den Merkmalen des kennzeichnenden Teils von Anspruch 1 gelöst.

Die Verschlusskappe besteht in an sich bekannter Weise aus einer Kopfplatte und einer etwa zylindrischen Kappenschürze, die sich vom Rand der Kopfplatte erstreckt. An der Innenseite der Kappenschürze ist ein Kappengewinde vorgesehen, welches mit einem Mündungsgewinde an einer Behältermündung in Eingriff bringbar ist.

Im Übergangsbereich zwischen der Kopfplatte und der Kappenschürze sind an der Innenseite der Kappenschürze Verstärkungsrippen vorgesehen, die sich bis an die Kopfplatte erstrecken. Im Fall einer Verschlusskappe mit einer im Uebergangsbereich zwischen Kappenschürze und Kopfplatte angeordneten Aussendichtung können sich die Verstärkungsrippen auch nur bis unterhalb die Aussendichtung erstrecken.

Die erfindungsgemässe Verschlusskappe weist keine zusätzlichen Bremselemente auf, die die Aufschraubbewegung begrenzen. Das Ende der Aufschraubbewegung wird dadurch bestimmt, dass die Innenseite der Kopfplatte an der Stirnseite der Behältermündung anschlägt.

Die Verstärkungsrippen zwischen der Kopfplatte und der Kappenschürze führen dazu, dass dem Überdrehen der Verschlusskappe auch mit erhöhtem Kraftaufwand wirkungsvoll entgegengewirkt wird. Die Verstärkungsrippen versteifen Kappenschürze und Kopfplatte im Übergangsbereich, so dass eine radiale Ausbeulung der Kappenschürze oder ein übermässiges Aufspreizen von Kopfplatte und Kappenschürze vermieden wird.

Gemäss einem bevorzugten Ausführungsbeispiel der Erfindung sind die Verstärkungsrippen in Umfangsrichtung gesehen in einem Bereich nach dem kopfplattenseitigen Ende des Kappengewindes angeordnet.

Vorteilhaft erstrecken sich die Verstärkungsrippen in axialer Richtung nach unten bis wenigstens zu einer gedachten Schraubenlinie, die etwa der Fortsetzung des Kappengewindes entspricht.

Damit bilden die Verstärkungsrippen eine Verlängerung des Kappengewindes.

Bei sich bis unterhalb der gedachten Schraubenlinie erstreckenden Verstärkungsrippen wird zusätzlich ein Bremseffekt am Ende des Aufschraubvorgangs bzw. eine zusätzliche Überdrehsicherung bewirkt.

Die Verstärkungsrippen erstrecken sich vorteilhaft etwa über einen Winkelbereich von 90°, der sich in Umfangsrichtung gesehen an das Ende des Kappengewindes anschliesst.

In einem weiteren bevorzugten Ausführungsbeispiel können ausserdem zusätzliche, zweite Verstärkungsrippen im Übergangsbereich zwischen Kopfplatte und Kappenschürze vorgesehen sein. Diese zweiten Verstärkungsrippen sind ausserhalb des Winkelbereichs angeordnet, über welchen sich die Verstärkungsrippen erstrecken. Die Länge der zweiten Verstärkungsrippen ist in axialer Richtung je etwa gleich gross. Die zweiten Verstärkungsrippen haben also eine Versteifungsfunktion und bilden keine Fortsetzung des Kappengewindes. Die zweiten Verstärkungsrippen können ausserdem auf dem Gewindeanfang der Behältermündung auflaufen und so die Aufschraubbewegng ebenfalls begrenzen.

Die Verstärkungsrippen und/oder die zweiten Verstärkungsrippen erstrecken sich ausserdem vorteilhaft in radialer Richtung soweit nach innen, dass ihre Innenflächen auf einem gedachten Zylinderabschnitt liegen. Der gedachte Zylinderabschnitt entspricht im wesentlichen etwa der zylindrischen Aussenfläche der Behältermündung. Auf diese Weise haben die Verstärkungsrippen und ggf. die zweiten Verstärkungsrippen ausserdem eine Zentrie-rungswirkung.

Die Verstärkungsrippen sind besonders vorteilhaft, wenn die Verschlusskappe an der Innenseite der Kopfplatte mit einer Anschlagfläche versehen ist, die bei aufgesetzter Verschlusskappe in Eingriff mit der Stirnseite der Behältermündung steht. Auf diese Weise wird die Aufschraublage genau definiert. Auf die Kopfplatte wirkende Kräfte, welche normalerweise zu einer Verformung der Kopfplatte führen könnten, werden über die Verstärkungsrippen in die Kappenwand geleitet. Die Verstärkungsrippen führen auf Grund der reduzierten Verformbarkeit der Kopfplatte sowohl zu einer genauer definierten Endlage der Verschlusskappe als auch zu einer Überdrehsicherung. Besonders vorteilhaft kann ausserdem eine Ueberdrehsicherung wie in WO 95/2105 beschrieben eingesetzt werden. Die Versteifungsrippen sind dabei gegenüber dem Bremselement angeordnet. Es können z.B. zwei Versteifungsrippen vorgesehen sein. Der Inhalt der WO 95/2105 wird ausdrücklich in die vorliegende Anmeldung aufgenommen.

Die Erfindung wird im folgenden anhand von Ausführungsbeispielen und anhand der Zeichnungen näher erläutert. Es zeigen:
- Figur 1: einen Querschnitt durch eine erfindungsgemässe Verschlusskappe entlang der Ebene A-A aus Figur 4,
- Figur 2: eine schematische perspektivische Darstellung einer aufgeschnittenen erfindungsgemässen Verschlusskappe auf einer Behältermündung,
- Figur 3: eine vergrösserte Darstellung einer erfindungsgemässen Verschlusskappe auf einer Behältermündung im Übergangsbereich zwischen Kopfplatte und Kappenschürze,
- Figur 4: einer Unteransicht der erfindungsgemässen Verschlusskappe,
- Figur 5: eine vergrösserte Darstellung des Ausschnitts C aus Figur 4,
- Figuren 6a und 6b: schematische Darstellungen von weiteren Ausführungsbeispielen, und
- Figur 7: schematische Darstellung eines Ausführungsbeispiels mit Aussendichtung.

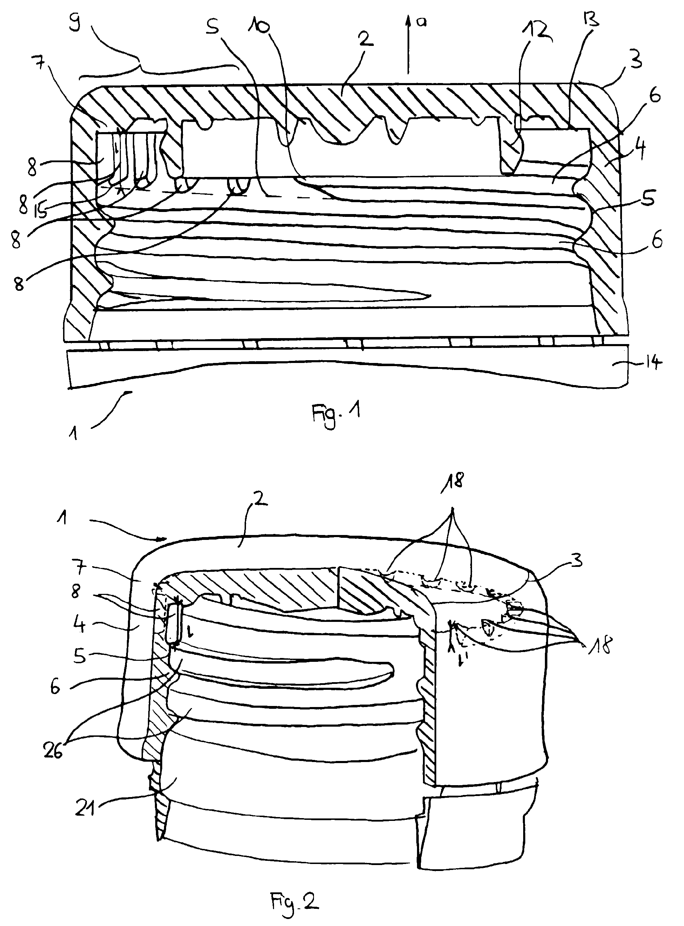

In Figur 1 ist im Querschnitt eine Verschlusskappe 1 gezeigt. Die Verschlusskappe 1 weist eine Kopfplatte 2 auf. Vom Rand 3 der Kopfplatte 2 erstreckt sich eine etwa zylindrische Kappenschürze 4. Die Kappenschürze 4 ist auf ihrer Innenseite 5 mit einem Kappengewinde 6 versehen. Das Kappengewinde 6 dient zum Aufschrauben der Verschlusskappe 1 auf eine Behältermündung 21 mit einem Mündungsgewinde 26 (siehe Figur 2).

Die Verschlusskappe 1 ist in üblicher Weise mit einer Innendichtung 12 versehen. Die Verschlusskappe kann ausserdem ein Garantieband 14 aufweisen.

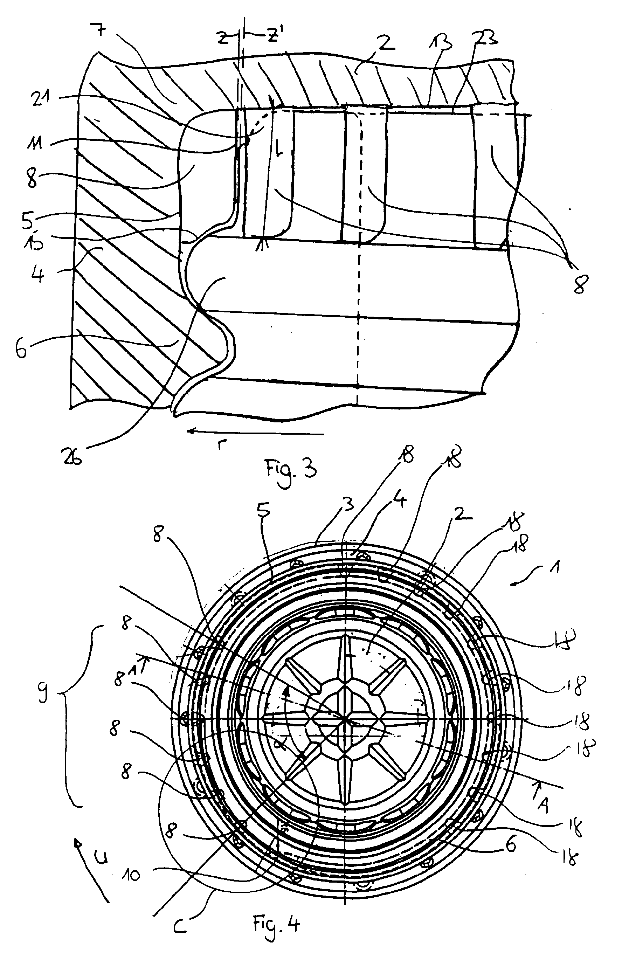

An der Innenseite der Kopfplatte 2 ist ein Anschlag 13 vorgesehen, der bei aufgesetzter Verschlusskappe 1 mit der Stirnseite 23 der Behältermündung 21 in Eingriff gerät (siehe Figur 3).

Im Übergangsbereich 7 zwischen der Kopfplatte 2 und der Kappenschürze 4 sind an der Innenseite 5 Verstärkungsrippen 8 vorgesehen. Die Verstärkungsrippen 8 erstrecken sich in Achsrichtung a bis an die Kopfplatte 2 bzw. bis zum Anschlag 13. Die Verstärkungsrippen 8 versteifen die Kopfplatte 2 und die Kappenschürze 4 im Übergangsbereich 7. Aufgrund dieser Versteifung wird ein Überdrehen der Verschlusskappe vermieden.

Die Verstärkungsrippen 8 sind in einem Bereich 9 angeordnet, der sich in Umfangsrichtung an das Ende 10 des Kappengewindes 6 anschliesst. Mit Ende des Gewindes wird hier und im Folgenden das kopfplattenseitige Ende 10 des Kappengewindes 6 verstanden.

Die Länge 1 der Verstärkungsrippen 8 ist so gewählt, dass der untere Rand 15 der Verstärkungsrippen 8 einer gedachten Schraubenlinie S folgt, die eine Verlängerung des Kappengewindes 6 bildet.

In Figur 2 ist in perspektivischer Darstellung eine aufgeschnittene, auf eine Behältermündung 21 aufgesetzte Verschlusskappe 1 gezeigt. Gleiche Bezugszeichen wie in Figur 1 bezeichnen gleiche Teile.

Figur 2 zeigt, dass die Verstärkungsrippen 8 eine Verlängerung des Schraubengewindes 6 der Verschlusskappe 2 bilden und dem Mündungsgewinde 26 der Behältermündung 21 folgen.

In der rechten Hälfte von Figur 2 sind ausserdem zweite Verstärkungsrippen 18 gezeigt, die sich über einen Umfangsbereich von etwas weniger als 180° erstrecken und die diametral gegenüber den Verstärkungsrippen 8 angeordnet sind. Die Länge l' der zweiten Verstärkungsrippen 18 ist je gleich gross. Die zweiten Verstärkungsrippen 18 haben lediglich eine Versteifungsfunktion und bilden keine Verlängerung des Kappengewindes 6 der Verschlusskappe 1.

In Figur 3 ist in vergrösserter Darstellung ein Ausschnitt der Verschlusskappe 1 im Übergangsbereich 7 im Querschnitt gezeigt.

Die Verschlusskappe 1 befindet sich in aufgeschraubter Lage. Der Anschlag 13 liegt an der Stirnseite 23 der Behältermündung 21 an. Die Verstärkungsrippen 8 haben eine unterschiedliche Länge l. Die Länge l ist so gewählt, dass bei aufgeschraubter Verschlusskappe (d.h. bei Anlage der Stirnseite 23 am Anschlag 13) der untere Rand 15 der Verstärkungsrippen 8 am Mündungsgewinde 26 anliegt. In Figur 3 wird die Versteifungswirkung der Verstärkungsrippen 8 deutlich. Wenn der Anschlag 13 an der Stirnfläche 23 anliegt, wird ein Weiterdrehen der Verschlusskappe 1 vermieden, weil sich die Kopfplatte 2 im Bezug auf die Kappenschürze 4 nicht bewegen kann.

Die Verstärkungsrippen 8 haben gleichzeitig eine Zentrierfunktion. Die Verstärkungsrippen 8 erstrecken sich in radialer Richtung r soweit nach innen, dass ihre Innenfläche 11 auf einem gedachten Zylinderausschnitt Z liegt. Der Zylinderausschnitt Z entspricht etwa der Zylinderfläche Z', die durch die Behältermündung 21 definiert wird.

In Figur 4 ist eine Unteransicht der Verschlusskappe aus Figur 1 gezeigt. Figur 1 entspricht einem Schnitt entlang der Ebene A-A in Figur 4. Gemäss Figur 4 sind sechs Verstärkungsrippen 8 in einem Bereich 9 angeordnet, der sich an das Ende 10 des Kappengewindes 6 anschliesst. Der Bereich 9 erstreckt sich über einen Winkel a von etwa 90°. Der Bereich 9 ist in Umfangsrichtung U gesehen benachbart zum Ende 10 des Kappengewindes 6 angeordnet. Diametral gegenüberliegend sind zweite Verstärkungsrippen 18 angeordnet. Zehn zweite Verstärkungsrippen 18 erstrecken sich etwa über einen Winkelbereich von 150°. Die zweiten Verstärkungsrippen 18 haben je die gleiche Länge 1' (siehe auch Figur 2).

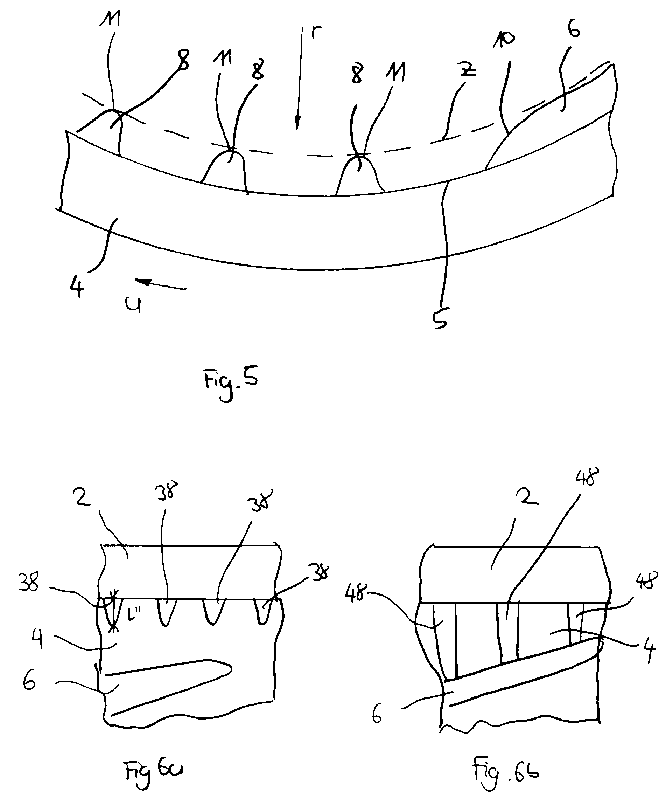

Figur 5 zeigt eine vergrösserte Darstellung des Ausschnitts C aus Figur 4. Die Innenflächen 11 der Verstärkungsrippen 8 folgen einer gedachten Zylinderfläche Z. Die Verstärkungsrippen 8 sind in Umfangsrichtung U gesehen nach dem Ende 10 des Kappengewindes 6 angeordnet.

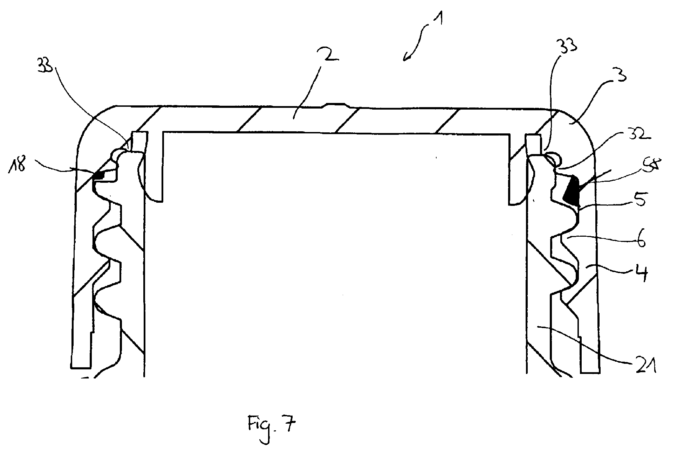

Selbstverständlich sind auch andere Konfigurationen der Verstärkungsrippen denkbar. So ist es möglich, eine Mehrzahl von gleich langen Verstärkungsrippen regelmässig über den Umfang der Verschlusskappe zu verteilen. Ausserdem ist es denkbar, Verstärkungsrippen vorzusehen, die sich von dem Kappengewinde bis zur Kopfplatte erstrecken. In Figur 6a ist ein Ausführungsbeispiel schematisch dargestellt, bei welchem eine Vielzahl gleich langen Verstärkungsrippen 38 gleichmässig über den ganzen Umfang der Verschlusskappe angeordnet sind. Die Länge l`` aller Verstärkungsrippen ist dabei identisch. Das untere Ende der Verstärkungsrippen 6 ist oberhalb des Kappengewindes 6 angeordnet. In Figur 6b sind schematisch Verstärkungsrippen 48 dargestellt, die sich vom oberen Rand des Kappengewindes 6 bis zur Kopfplatte 2 erstrecken. Die Verstärkungsrippen 48 sind dabei so angeordnet, dass sie ausserhalb des vom Mündungsgewinde 26 des Behälters verwendeten Gewindebereich liegen.

Auch die Verstärkungsrippen 38, 48 der Figuren 6a und 6b führen zu der gewünschten Versteifung zwischen Kappenschürze 4 und Kopfplatte 2.

Figur 7 zeigt ein weiteres alternatives Ausführungsbeispiel. Gleiche Bezugszeichen bezeichnen gleiche Teile wie in den vorhergehenden Figuren.

Die Verstärkungsrippen 58 erstrecken sich bis an die Unterseite einer Aussendichtung 32. Der Anschlag zwischen der Behältermündung 21 und der Verschlusskappe 1 erfolgt über eine Stirndichtung 33.

Zweite Verstärkungsrippen 18 sind diametral gegenüber der Verstärkungsrippe 18 angeordnet. Die Verstärkungsrippen 18 laufen auf dem Gewindeanfang auf und bilden dabei ebenfalls eine Bremswirkung. Aufgrund der Versteifungsrippen 18, 58 wird die Axialkraft beim Ueberdrehen in Umfangsrichtung gleichmässig verteilt.

## Patentansprüche

1. Verschlusskappe (1), insbesondere für einen Behälter mit kohlesäurehaltigen Getränken,
mit einer Kopfplatte (2) und einer sich vom Rand (3) der Kopfplatte (2) erstreckenden, etwa zylindrischen Kappenschürze (4),
welche an ihrer Innenseite (5) mit einem Kappengewinde (6) versehen ist, das mit einem Mündungsgewinde (26) einer Behältermündung (21) in Eingriff bringbar ist,
dadurch gekennzeichnet, dass im Übergangsbereich (7) zwischen der Kopfplatte (2) und der Kappenschürze (4) an der Innenseite (5) der Kappenschürze (4) Verstärkungsrippen (8; 38; 48; 58) vorgesehen sind, die sich bis an die Kopfplatte (2) oder zu einer Aussendichtung (32) erstrecken.

2. Verschlusskappe nach Anspruch 1, dadurch gekennzeichnet, dass die Verstärkungsrippen (8; 38; 48) in Umfangsrichtung (U) gesehen in einem Bereich (9) nach dem kopfplattenseitigen Ende (10) des Kappengewindes (6) angeordnet sind.

3. Verschlusskappe nach einem der Ansprüche 1 oder 2, dadurch gekennzeichnet, dass die Verstärkungsrippen (8) sich axial nach unten bis wenigstens zu einer gedachten Schraubenlinie (S) erstrecken, die etwa einer Fortsetzung des Kappengewindes (6) entspricht.

4. Verschlusskappe nach Anspruch 3, dadurch gekennzeichnet, dass die Verstärkungsrippen (8) sich in Achsrichtung über die gedachte Schraubenlinie (S) hinaus nach unten erstrekken.

5. Verschlusskappe nach einem der Ansprüche 1 bis 4, dadurch gekennzeichnet, dass die Verstärkungsrippen (8) in einem Bereich angeordnet sind, der sich über einen Winkelbereich (α) von etwa 90° erstreckt.

6. Verschlusskappe nach einem der Ansprüche 1 bis 5, dadurch gekennzeichnet, dass zusätzliche, zweite Verstärkungsrippen (18) im Übergangsbereich (7) zwischen der Kopfplatte (2) und der Kappenschürze (4) ausserhalb des Bereichs (9) angeordnet sind, in dem sich die Verstärkungsrippen (8) befinden.

7. Verschlusskappe nach Anspruch 6, dadurch gekennzeichnet, dass die zweiten Verstärkungsrippen (18) in axialer Richtung (a) je die gleiche Länge (l') aufweisen.

8. Verschlusskappe nach einem der Ansprüche 1 bis 7, dadurch gekennzeichnet, dass die Verstärkungsrippen (8) und/oder die zweiten Verstärkungsrippen (18) sich in radialer Richtung (r) soweit nach innen erstrecken, dass ihre Innenfläche (11) auf einem gedachten Zylinderausschnitt (Z) liegen, der im wesentlichen der zylindrischen Aussenfläche (Z') der Behältermündung (21) entspricht.

9. Verschlusskappe nach einem der Ansprüche 1 bis 8, dadurch gekennzeichnet, dass die Kopfplatte (2) mit einer Anschlagfläche (13) versehen ist, der mit der Stirnseite (23) der Behältermündung (21) in Eingriff bringbar ist.

10. Verschlusskappe nach einem der Ansprüche 1 bis 9, dadurch gekennzeichnet, dass ausserhalb des bei aufgesetzter Verschlusskappe verwendeten Gewindebereichs gegenüber den Versteifungsrippen ein Bremselement angeordnet ist.
